(19) Europäisches Patentamt
European Patent Office
Office européen des brevets

(11) **EP 2 402 938 A1**

(12) **EUROPEAN PATENT APPLICATION**
published in accordance with Art. 153(4) EPC

(43) Date of publication:
**04.01.2012 Bulletin 2012/01**

(51) Int Cl.:
***G10L 11/00*** *(2006.01)*    ***G10L 19/00*** *(2006.01)*

(21) Application number: **10746013.1**

(22) Date of filing: **26.02.2010**

(86) International application number:
**PCT/JP2010/001331**

(87) International publication number:
**WO 2010/098130 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.02.2009 JP 2009046517**
        **18.05.2009 JP 2009120112**
        **13.10.2009 JP 2009236451**

(71) Applicant: **Panasonic Corporation**
**Kadoma-shi**
**Osaka 571-8501 (JP)**

(72) Inventors:
• **SATOH, Kaoru**
**Osaka-shi**
**Osaka 540-6207 (JP)**
• **MORII, Toshiyuki**
**Osaka-shi**
**Osaka 540-6207 (JP)**
• **EHARA, Hiroyuki**
**Osaka-shi**
**Osaka 540-6207 (JP)**

(74) Representative: **Grünecker, Kinkeldey, Stockmair & Schwanhäusser**
**Leopoldstrasse 4**
**80802 München (DE)**

(54) **TONE DETERMINATION DEVICE AND TONE DETERMINATION METHOD**

(57)    Disclosed is a tone determination device that determines the tonality of an input signal using correlations between the frequency components of a current frame with the frequency components of the preceding frame, such that the tone determination device is able to decrease the calculation complexity. In the device, a vector coupling unit (104) couples some of the SDFT coefficients of the preceding frame with some of the down-sampled SDFT coefficients of the preceding frame to generate new SDFT coefficients, and also couples some of the SDFT coefficients of the current frame with some of the down-sampled SDFT coefficients of the current frame to generate new SDFT coefficients. A correlation analysis unit (105) finds correlations for the SDFT coefficients between frames, and also finds the power of the current frame for each specific band. A band determination unit (106) determines the band with the greatest power and outputs the location information for the determined band as shift information, and a tone determination unit (107) determines the tonality of the input signal according to the values of the correlations input from the correlation analysis unit (105).

FIG.1

**Description**

Technical Field

The present invention relates to a tone determining apparatus and a tone determination method.

Background Art

In fields such as digital wireless communication, packet communication represented by Internet communication, and voice storage, in order to efficiently use the capacity of a transmission channel such as radio waves, and storage media, a technology for encoding and decoding voice signals is essentially used. For this reason, many voice encoding/decoding methods have been developed until now. Among them, a code excited linear prediction (CELP) type voice encoding/decoding method has been put to practical use as a mainstream method.

A CELP type voice encoding apparatus encodes an input voice on the basis of a voice model stored in advance. Specifically, the CELP type voice encoding apparatus divides a digitalized voice signal into frames having a duration of about 10 ms to 20 ms, performs linear prediction analysis of the voice signal for every frame so as to obtain linear prediction coefficients and linear prediction residual vectors, and encodes each of the linear prediction coefficients and the linear prediction residual vectors.

Also, a variable-rate encoding apparatus which changes a bit rate in response to an input signal has also been implemented. In the variable-rate encoding apparatus, in a case where an input signal mainly includes a lot of voice information, it is possible to encode the input signal at a high bit rate, and in a case where an input signal mainly includes a lot of noise information, it is possible to encode the input signal at a low bit rate. That is, in a case where a lot of important information is included, high-quality encoding can be performed to improve the quality of an output signal to be reproduced in a decoding device side, and in a case where the importance is low, suppression to low-quality encoding can be performed to save power, a transmission band, and the like. As described above, by means such that the characteristics (for example, voicedness, unvoicedness, tonality, and the like) of an input signal can be detected and the encoding method varies depending on the detection result, it is possible to perform encoding appropriate for the characteristics of the input signal and improve the encoding performance.

As a means for classifying an input signal into voice information and noise information, there is a voice active detector (VAD). Specifically, there are the following methods: (1) a method of quantizing an input signal to perform class separation and classifying the input signal into voice information and noise information in accordance with the class information, (2) a method of obtaining a fundamental period of an input signal and classifying the input signal into voice information and noise information in accordance with the level of the correlation between a current signal and a previous signal preceding the current signal by the length of the fundamental period, (3) a method of examining a time change of frequency components of an input signal and classifying the input signal into voice information and noise information in accordance with the change information, etc.

Also, there is a technology for obtaining frequency components of an input signal by shifted discrete Fourier transform (SDFT) and classifying a tonality of the input signal in accordance with a level of a correlation between frequency components of a current frame and frequency components of a previous frame (for example, patent literature 1). In the technology disclosed in patent literature 1, the frequency band extension method varies depending on the tonality to improve the encoding performance.

Citation List

Patent Literature

PTL 1
WO 2007/052088

Summary of Invention

Technical Problem

However, in a tone determining apparatus as disclosed in patent literature 1, that is, a tone determining apparatus which obtains frequency components of an input signal by SDFT and detects a tonality of the input signal by the correlation between frequency components of a current frame and frequency components of a previous frame, the correlation is obtained by taking all frequency bands into consideration. This causes a problem in that an amount of computation is large.

An object of the present invention is to reduce an amount of computation in a tone determining apparatus and a tone determination method which obtain frequency components of an input signal and determine a tonality of the input signal by the correlation between frequency components of a current frame and frequency components of a previous frame.

Solution to Problem

A tone determining apparatus of the present invention has a configuration including a shortening section for shortening a length of a vector sequence of an input signal subjected to frequency transform, a correlation selection for obtaining a correlation by using the shortened vector sequence, and a determining section for determining a tonality of the input signal by using the correlation.

Advantageous Effects of Invention

According to the present invention, it is possible to reduce the amount of computation for tone determination.

Brief Description of Drawings

FIG.1 is a block diagram illustrating a main confirmation of a tone determining apparatus according to Embodiment 1 of the present invention;

FIG.2 is a view illustrating a state of a SDFT-coefficient coupling process according to Embodiment 1 of the present invention;

FIG.3 is a block diagram illustrating an internal configuration of a correlation analyzing section according to Embodiment 1 of the present invention;

FIG.4 is a block diagram illustrating an internal configuration of a band determining section according to Embodiment 1 of the present invention;

FIG.5 is a block diagram illustrating a main configuration of a tone determining apparatus according to Embodiment 2 of the present invention;

FIG.6 is a view illustrating a state of a SDFT-coefficient dividing process and a down-sampling process according to Embodiment 2 of the present invention;

FIG.7 is a block diagram illustrating a main configuration of an encoding apparatus according to Embodiment 3 of the present invention;

FIG.8 is a block diagram illustrating a main configuration of a tone determining apparatus according to Embodiment 4 of the present invention;

FIG.9 is a view illustrating a state of a SDFT-coefficient coupling process according to Embodiment 4 of the present invention; and

FIG.10 is a block diagram illustrating a main configuration of an encoding apparatus according to Embodiment 5 of the present invention.

Description of Embodiments

Hereinafter, Embodiments of the present invention will be described in detail with reference to the accompanying drawings.

(Embodiment 1)

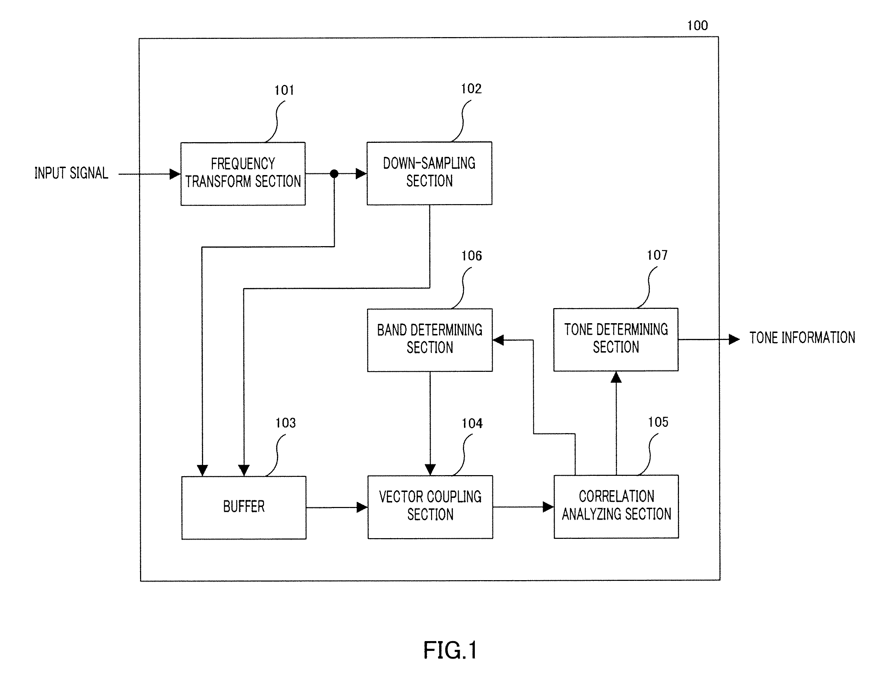

FIG. 1 is a block diagram illustrating a main configuration of tone determining apparatus 100 according to Embodiment 1. Here, the following description will be made by taking, as an example, a case where tone determining apparatus 100 determines a tonality of an input signal and outputs the determination result. The input signal may be a voice signal or a musical sound signal.

In FIG.1, frequency transform section 101 performs frequency transform on the input signal by using SDFT, and outputs SDFT coefficients, which are frequency components obtained by the frequency transform, to down-sampling section 102 and buffer 103.

Down-sampling section 102 performs down-sampling on the SDFT coefficients input from frequency transform section 101, so as to shorten a length of the SDFT coefficient sequence. Next, down-sampling section 102 outputs the down-sampled SDFT coefficients to buffer 103.

Buffer 103 stores SDFT coefficients of a previous frame and down-sampled SDFT coefficients of the previous frame therein, and outputs the SDFT coefficients and the down-sampled SDFT coefficients to vector coupling section 104. Next, buffer 103 receives SDFT coefficients of a current frame from frequency transform section 101 while receiving down-sampled coefficients of the current frame from down-sampling section 102, and outputs the SDFT coefficients and the down-sampled SDFT coefficients to vector coupling section 104. Subsequently, buffer 103 replaces the SDFT coefficients of the previous frame and the down-sampled SDFT coefficients of the previous frame stored therein, with the SDFT coefficients of the current frame and the down-sampled SDFT coefficients of the current frame, respectively, thereby performing SDFT coefficient update.

Vector coupling section 104 receives the SDFT coefficients of the previous frame, the down-sampled SDFT coefficients of the previous frame, the SDFT coefficients of the current frame, and the down-sampled SDFT coefficients of the current frame from buffer 103 while receiving shift information from band determining section 106. Next, vector coupling section 104 couples a portion of the SDFT coefficients of the previous frame with a portion of the down-sampled SDFT coefficients of the previous frame so as to generate new SDFT coefficients (coupled SDFT coefficients of the previous frame), and outputs the new SDFT coefficients to correlation analyzing section 105. Also, vector coupling section 104 couples a portion of the SDFT coefficients of the current frame with a portion of the down-sampled SDFT coefficients of the current frame so as to generate new SDFT coefficients (coupled SDFT coefficients of the current frame), and outputs the new SDFT coefficients to correlation analyzing section 105. At this time, how to perform coupling is determined according to the shift information.

Correlation analyzing section 105 receives the coupled SDFT coefficients of the previous frame and the coupled SDFT coefficients of the current frame from vector coupling section 104, obtains a SDFT coefficient correlation between the frames, and outputs the obtained correlation to tone determining section 107. Also, correlation analyzing section 105 obtains the power of the current frame for every predetermined band, and outputs the power per band of the current frame as power information to band determining section 106. Since the power is an incidental secondary product obtained in the correlation obtaining process, there is no need to separately perform computation for obtaining the power.

Since a band in which the power is the maximum is a band important in determining the tonality of the input signal, band determining section 106 determines the band in which the power is the maximum, by using the power information input from correlation analyzing section 105, and outputs position information of the determined band as the shift information to vector coupling section 104.

Tone determining section 107 determines the tonality of the input signal in response to a value of the correlation input from the correlation analyzing section 105. Next, tone determining section 107 outputs tone information as an output of tone determining apparatus 100.

Next, an operation of tone determining apparatus 100 will be described by taking, as an example, a case where the order of the input signal, which is a tone determination subject, is 2N (N is an integer of 1 or more). In the following description, the input signal is denoted by x(i) (i = 0, 1, ···, 2N-1).

Frequency transform section 101 receives input signal x(i) (i = 0, 1, ···, 2N-1), performs frequency transform according to the following equation 1, and outputs obtained SDFT coefficients Y(k) (k = 0, 1, ···, N) to down-sampling section 102 and buffer 103.

[1]

$$Y(k) = \sum_{n=0}^{2N-1} h(n)x(n)\exp(i2\pi(n+u)(k+v)/2N) \qquad \cdots \text{Equation 1}$$

Here, h(n) is a window function, and uses an MDCT window function or the like. Further, u is a coefficient of time shift and v is a coefficient of frequency shift. For example, u and v may be set to (N+1)/2 and 1/2, respectively.

Down-sampling section 102 receives SDFT coefficients Y(k) (k = 0, 1, ···, N) from frequency transform section 101, and performs down-sampling according to the following Equation 2.

[2]

$$Y\_re(m) = j0 \cdot Y(n-1) + j1 \cdot Y(n) + j2 \cdot Y(n+1) + j3 \cdot Y(n+2) \qquad \cdots \text{Equation 2}$$

Here, n = m = 2 is established, and m has a value from 1 to (N/2 -1). In a case of m = 0, Y_re(0) = Y(0) may be set without down-sampling. Here, filter coefficients [j0, j1, j2, and j3] are set to low-band-pass-filter coefficients which are designed such that aliasing distortion does not occur. There is known that, for example, when the sampling frequency of the input signal is 32000 Hz, if j0, j1, j2, and j3 are set to 0.195, 0.3, 0.3, and 0.195, respectively, a good result is obtained.

Next, down-sampling section 102 outputs down-sampled SDFT coefficients Y_re(k) (k = 0, 1, ⋯, N/2 - 1) to buffer 103.

Buffer 103 receives SDFT coefficients Y(k) (k = 0, 1, ⋯, N) from frequency transform section 101 while receiving down-sampled SDFT coefficients Y_re(k) (k = 0, 1, ⋯, N/2 - 1) from down-sampling section 102. Next, buffer 103 outputs SDFT coefficients Y_pre(k) (k = 0, 1, ⋯, N) of the previous frame and down-sampled SDFT coefficients Y_re_pre(k) (k = 0, 1, ⋯, N/2 - 1) of the previous frame stored therein, to vector coupling section 104. Subsequently, buffer 103 outputs SDFT coefficients Y(k) (k = 0, 1, ⋯, N) of the current frame and down-sampled SDFT coefficients Y_re (k) (k = 0, 1, ⋯, N/2 - 1) of the current frame to vector coupling section 104. Next, buffer 103 stores SDFT coefficients Y (k) (k = 0,1, ⋯, N) of the current frame as Y_pre(k) (k = 0,1, ⋯, N) therein, and stores down-sampled SDFT coefficients Y_re(k) (k = 0, 1, ⋯, N/2 - 1) of the current frame as Y_re_pre(k) (k = 0, 1, ⋯, N/2 - 1) therein. That is, buffer updating is performed by replacing the SDFT coefficients of the previous frame with the SDFT coefficients of the current frame.

Vector coupling section 104 receives SDFT coefficients Y(k) (k = 0, 1, ⋯, N) of the current frame, down-sampled SDFT coefficients Y_re(k) (k = 0, 1, ⋯, N/2 - 1) of the current frame, SDFT coefficients Y_pre(k) (k = 0, 1, ⋯, N) of the previous frame, and down-sampled SDFT coefficients Y_re_pre(k) (k = 0, 1, ⋯, N/2 -1) of the previous frame from buffer 103 while receiving shift information SH from band determining section 106. Next, vector coupling section 104 couples the SDFT coefficients of the current frame according to the following Equation 3.

[3]

$$Y\_co(k) = Y\_re(k) \quad (k = 0,1,\cdots,SH/2-1)$$
$$Y\_co(k) = Y(k+SH/2) \quad (k = SH/2,\cdots,SH/2+LH-1)$$
$$Y\_co(k) = Y\_re(k-LH/2) \quad (k = SH/2+LH,\cdots,(N+LH)/2-1) \qquad \cdots\text{Equation 3}$$

Similarly, vector coupling section 104 couples the SDFT coefficients of the previous frame according to the following Equation 4.

[4]

$$Y\_co\_pre(k) = Y\_re\_pre(k) \quad (k = 0,1,\cdots,SH/2-1)$$
$$Y\_co\_pre(k) = Y\_pre(k+SH/2) \quad (k = SH/2,\cdots,SH/2+LH-1)$$
$$Y\_co\_pre(k) = Y\_re\_pre(k-LH/2) \quad (k = SH/2+LH,\cdots,(N+LH)/2-1)$$

$$\cdots\text{Equation 4}$$

Here, LH is a length of SDFT coefficients Y(k) (k = 0, 1, ⋯, N) used for the coupling, or a length of Y_pre(k) (k = 0, 1, ⋯, N) used for the coupling.

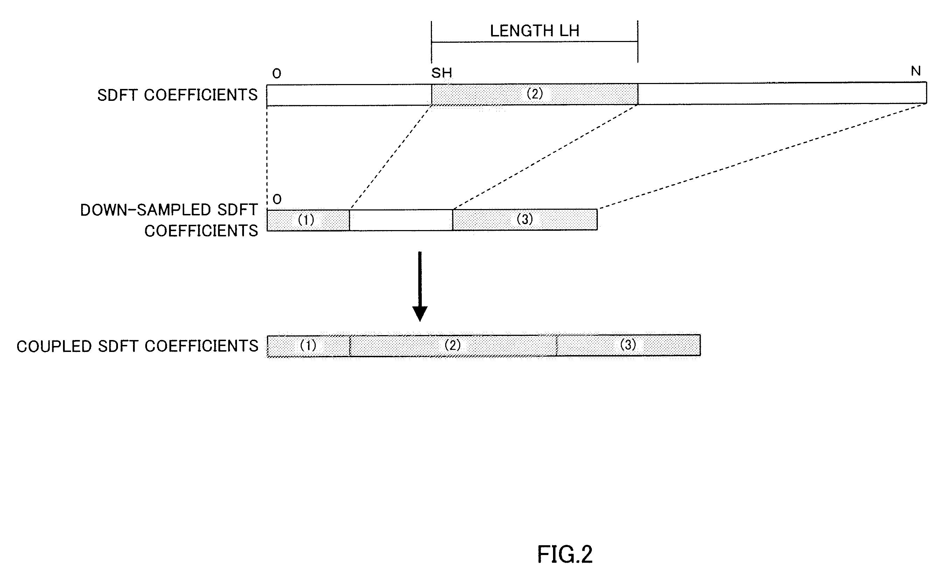

A state of the coupling process in vector coupling section 104 is as shown in FIG.2.

As shown in FIG.2, down-sampled SDFT coefficients ((1) and (3)) are basically used for coupled SDFT coefficients, and SDFT coefficients (2) corresponding to a range with shift information SH in the lead and length LH is inserted between (1) and (2), whereby coupling is performed. Broken lines in FIG.2 represent correspondence between ranges before the down-sampling and ranges after the down-sampling corresponding to identical frequency bands. That is, as shown in FIG.2, shift information SH is a value indicating which frequency band SDFT coefficients Y(k) (k = 0, 1, ⋯, N) or SDFT coefficients Y_pre(k) (k = 0, 1, ⋯, N) are extracted from. Here, LH which is a length of an extracted range is preset to an appropriate constant value. If LH increases, since the coupled SDFT coefficients is lengthened, an amount of computation in the sequential process of obtaining a correlation increases, while the obtained correlation is more accurate. Accordingly, LH may be determined in consideration of a tradeoff between the amount of computation and the accuracy of the correlation. Also, it is also possible to adaptively change LH.

Next, vector coupling section 104 outputs coupled SDFT coefficients Y_co(k) (k = 0, 1, ···, K) of the current frame and coupled SDFT coefficients Y_co_pre(k) (k = 0, 1, ···, K) of the previous frame to correlation analyzing section 105. Here, K is (N + LH)/2 - 1.

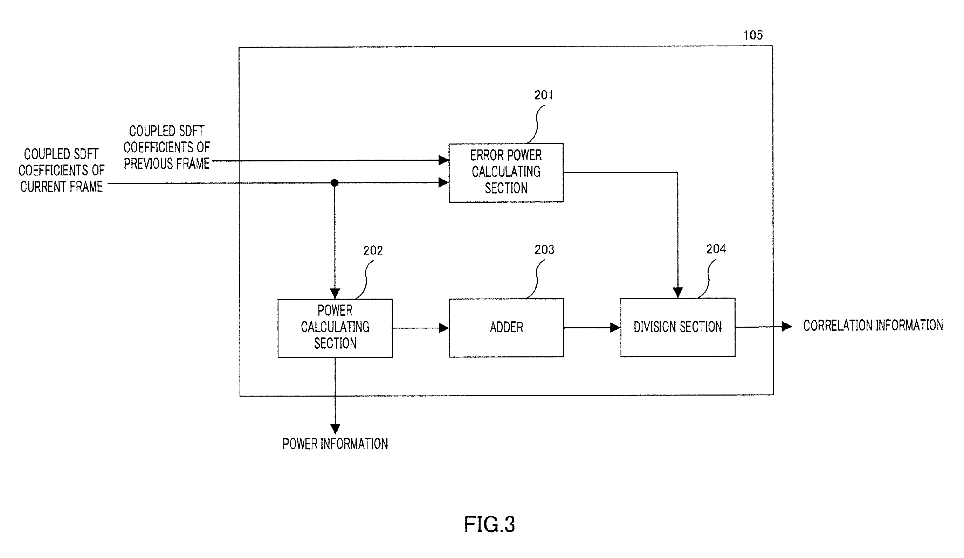

FIG.3 is a block diagram illustrating an internal configuration of correlation analyzing section 105 according to Embodiment 1.

In FIG.3, error power calculating section 201 receives coupled SDFT coefficients Y_co(k) (k = 0, 1, ···, K) of the current frame and coupled SDFT coefficients Y_co_pre(k) (k = 0, 1, ···, K) of the previous frame from vector coupling section 104, and obtains error power SS according to the following Equation 5.

$$[5]$$

$$SS = \sum_{k=0}^{K} \left( \left| Y\_co(k) \right| - \left| Y\_co\_pre(k) \right| \right)^2 \qquad \cdots \text{Equation 5}$$

Next, error power calculating section 201 outputs obtained error power SS to division section 204.

Power calculating section 202 receives coupled SDFT coefficients Y_co(k) (k = 0, 1, ···, K) of the current frame from vector coupling section 104, and obtains power SA(k) for every k according to the following Equation 6.

$$[6]$$

$$SA(k) = \left( \left| Y\_co(k) \right| \right)^2 \quad (k = 0,1,\cdots,K) \qquad \cdots \text{Equation 6}$$

Next, power calculating section 202 outputs obtained power SA(k) as power information to adder 203 and band determining section 106 (FIG.1).

Adder 203 receives power SA(k) from the power calculating section, and obtains power SA, which is the total sum of power SA(k), according to the following Equation 7.

$$[7]$$

$$SA = \sum_{k=0}^{K} SA(k) \qquad \cdots \text{Equation 7}$$

Next, adder 203 outputs obtained power SA to division section 204.

Division section 204 receives error power SS from error power calculating section 201 while receiving power SA from adder 203. Next, division section 204 obtains correlation S according to the following Equation 8, and outputs obtained correlation S as correlation information to tone determining section 107 (FIG.1).

$$[8]$$

$$S = \frac{SS}{SA} \qquad \cdots \text{Equation 8}$$

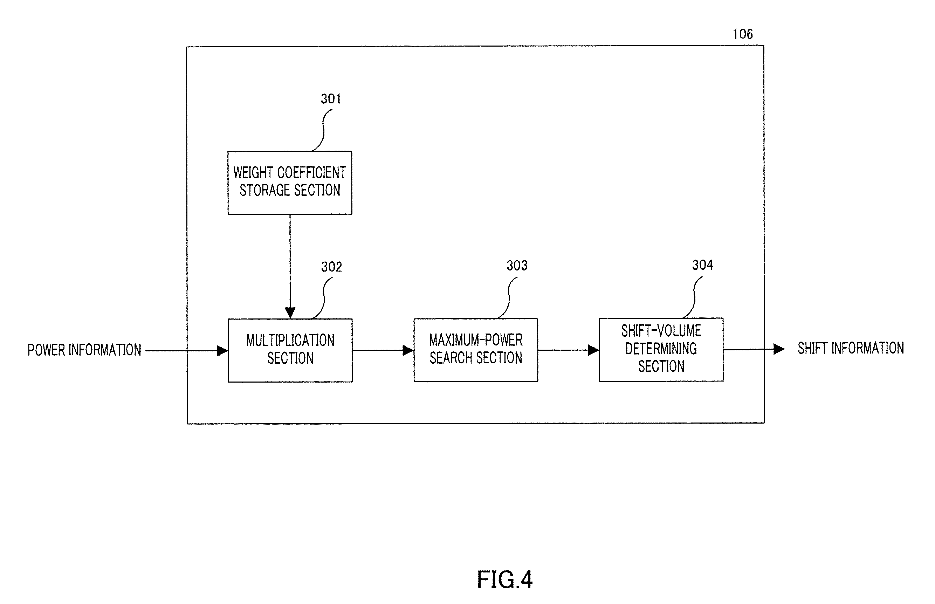

FIG.4 is a block diagram illustrating an internal configuration of band determining section 106 according to Embodiment 1.

In FIG.4, weight coefficient storage section 301 stores weight coefficients W(k) (k = 0, 1, ···, N) to be multiplied by power SA(k) output as the power information from correlation analyzing section 105 (FIG.1), shortens the weight coefficients to length K, and outputs the shortened weight coefficients as Wa(k) (k = 0, 1, ⋯, K) to multiplication section 302. The shortening method may alternately thin out W(k) in a range corresponding to k<SH or SH+LH-1<k. Here, weight coefficients W(k) (k = 0, 1, ⋯, N) may be set to 1.0 in a range of a low band and may be set to 0.9 in a range of a high band such that the range of the high band is regarded as being more important than the range of the low band.

Multiplication section 302 receives power SA(k) as the power information from correlation analyzing section 105 (FIG.1) while receiving weight coefficients Wa(k) (k = 0, 1, ⋯, K) from weight coefficient storage section 301. Next, multiplication section 302 obtains weighted power SW(k) (k = 0, 1, ⋯, K) by weight coefficient multiplication according to the following Equation 9, and outputs the weighted power to maximum-power search section 303.

[9]

$$SW(k) = SA(k) \times Wa(k) \quad (k = 0, 1, \cdots, K) \qquad \cdots \text{Equation 9}$$

Also, the weighting process by weight coefficient storage section 301 and multiplication section 302 can be omitted. The omission of the weighting process makes it possible to omit the multiplication necessary in Equation 9 and to further reduce the amount of computation.

Maximum-power search section 303 receives weighted power SW(k) (k = 0, 1, ⋯, K) from multiplication section 302, searches all k's for a k making weighted power SW(k) the maximum, and outputs the searched k to shift-volume determining section 304.

Shift-volume determining section 304 receives the k making weighted power SW(k) the maximum from maximum-power search section 303, obtains a value of SH matched with a frequency corresponding to the k, and outputs the SH value as shift information to vector coupling section 104 (FIG.1).

Tone determining section 107 shown in FIG.1 receives correlation S from correlation analyzing section 105, determines a tonality according to correlation S, and outputs the determined tonality as tone information. Specifically, tone determining section 107 may compare threshold T with correlation S, and determine the current frame as a 'tone' in a case where T > S is established, and determine the current frame as 'non-tone' in a case where T > S is not established. The value of threshold T may be an appropriate value statistically obtained by learning. Also, the tonality may be determined by the method disclosed in Patent literature 1. Moreover, a plurality of thresholds may be set and the degree of the tone may be determined in step wise.

As described above, according to Embodiment 1, since the down-sampling is performed before the correlation is obtained, thereby shortening the processed frame (vector sequence), it is possible to reduce the length of the processed frame (vector sequence) used for computation of the correlation, as compared to the related art. Therefore, according to Embodiment 1, it is possible to reduce the amount of computation necessary for determining the tonality of the input signal.

Further, according to Embodiment 1, the down-sampling is not performed in a section important for determining the tonality of the input signal (that is, a frequency band important for determining the tonality of the input signal), so as not to shorten the processed frame (vector sequence), the tone determination is performed by using the processed frame as it is. Therefore, it is possible to suppress deterioration of the tone determination performance.

Furthermore, the tonality is generally classified into a couple of classes (for example, two classes of the 'tone' and the 'non-tone' in the above description) by the tone determination, and a strictly accurate determination result is not required. Therefore, even when the processed frame (vector sequence) is shortened, it is likely that the classification result might finally converge to the same classification result as that when the processed frame (vector sequence) is not shortened.

Moreover, it is typically conceivable that the frequency band important for determining the tonality of the inputs signal is a frequency band in which the power of the frequency component is large. Therefore, in Embodiment 1, a frequency in which the power of the frequency component is the largest is searched for, and in a process of determining the tonality of the next frame, a range in which the down-sampling is not performed is set to a vicinity of the frequency in which the power is the largest. Therefore, it is possible to further suppress deterioration of the tone determination performance. Also, in Embodiment 1, in the determination of the tonality of the input signal, the band in which the power is the maximum is determined as the important frequency band. However, the frequency band in which the power corresponds to a preset condition may be determined as the important frequency band.

(Embodiment 2)

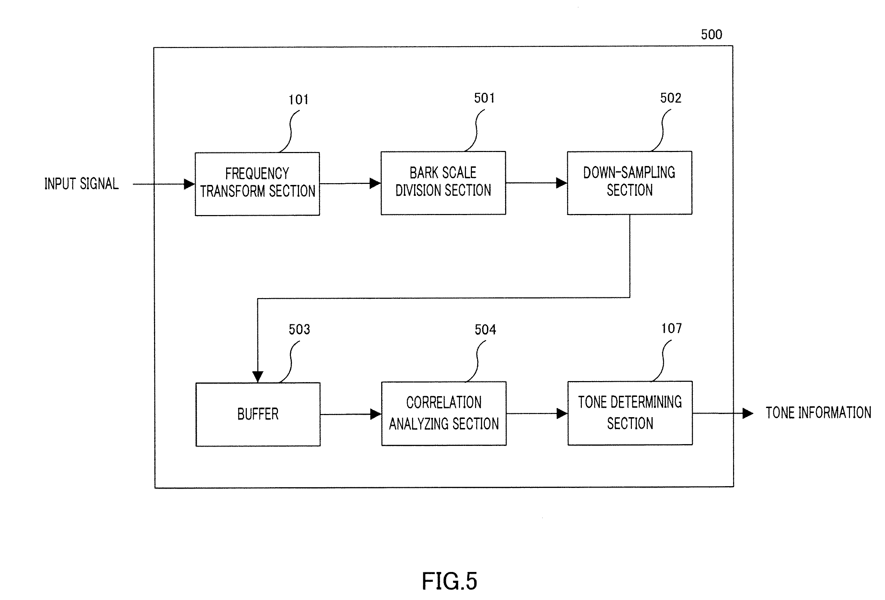

FIG.5 is a block diagram illustrating a main configuration of tone determining apparatus 500 according to Embodiment 2. Here, the following description will be made by taking, as an example, a case where tone determining apparatus 500 determines a tonality of an input signal and outputs the determination result. In FIG.5, identical components to those in FIG.1 (Embodiment 1) are denoted by the same reference symbol.

In FIG.5, frequency transform section 101 performs frequency transform on the input signal by using SDFT, and outputs SDFT coefficients obtained by the frequency transform to Bark scale division section 501.

Bark scale division section 501 divides the SDFT coefficients input from frequency transform section 101 according to a division ratio preset on the basis of the Bark scale, and outputs the divided SDFT coefficients to down-sampling section 502. Here, the Bark scale is a psychoacoustic scale proposed by Eberhard Zwicker, and is a critical band of human's hearing. The division in Bark scale division section 501 can be performed by using frequency values corresponding to the boundaries between every two adjacent critical bands.

Down-sampling section 502 performs a down-sampling process on the divided SDFT coefficients input from Bark scale division section 501, thereby shortening the length of the sequence of the SDFT coefficients. At this time, down-sampling section 502 performs a different down-sampling process on each divided SDFT coefficient section. Next, down-sampling section 502 outputs the down-sampled SDFT coefficients to buffer 503.

Buffer 503 stores the down-sampled SDFT coefficients of the previous frame therein, and outputs the down-sampled SDFT coefficients of the previous frame to correlation analyzing section 504. Also, buffer 503 outputs the down-sampled SDFT coefficients of the current frame input from down-sampling section 502, to correlation analyzing section 504. Then, buffer 503 replaces the down-sampled SDFT coefficients of the previous frame stored therein with the down-sampled SDFT coefficients of the current frame newly input, thereby perform SDFT coefficient update.

Correlation analyzing section 504 receives the SDFT coefficients of the previous frame and the SDFT coefficients of the current frame from buffer 503, obtains a SDFT coefficient correlation between the frames, and outputs the obtained correlation to tone determining section 107.

Tone determining section 107 determines the tonality of the input signal according to a value of the correlation input from correlation analyzing section 504. Next, tone determining section 107 outputs tone information as an output of tone determining apparatus 500.

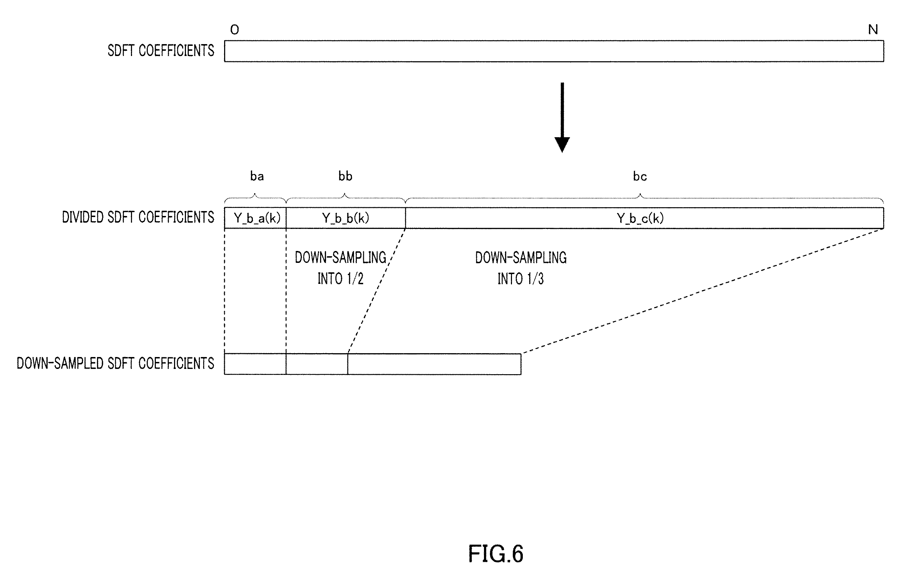

Next, an operation of tone determining apparatus 500 will be described with reference to FIG.6 by taking, as an example, a case where the order of the input signal, which is a tone determination subject, is 2N.

Bark scale division section 501 receives SDFT coefficients Y(k) (k = 0, 1, ···, N) from frequency transform section 101, and divides SDFT coefficients Y(k) (k = 0, 1, ···, N) at the division ratio based on the Bark scale. For example, when the sampling frequency of the input signal is 32000 Hz, Bark scale division section 501 can divide SDFT coefficients Y(k) (k = 0, 1, ···, N) into three sections Y_b_a(k), Y_b_b(k), and Y_b_c(k) at a ratio of ba : bb : bc based on the Bark scale, as expressed by the following Equation 10 (see FIG. 6).

[10]

$$
\begin{aligned}
Y\_b\_a(k) &= Y(k) \quad (k = 0,1,\cdots,ba-1) \\
Y\_b\_b(k) &= Y(k+ba) \quad (k = 0,1,\cdots,bb-1) \\
Y\_b\_c(k) &= Y(k+ba+bb) \quad (k = 0,1,\cdots,bc)
\end{aligned}
\qquad \cdots \text{Equation 10}
$$

Here, ba = INT (0.0575 x N), bb = INT (0.1969 x N) - ba, bc = N - bb -ba are established. INT means taking the integer part of a computation result in parenthesis. As an example of the division ratio, a ratio in a case of division into three bands of 0 Hz to 920 Hz, 920 Hz to 3150 Hz, and 3150 Hz to 16000 Hz on the basis of frequencies corresponding to the boundaries between every two adjacent critical bands is taken. The ratio of three bands is 0.0575 : 0.1394 : 0.8031). The division number and the division ratio are not limited to those values, but may be appropriately changed.

Next, Bark scale division section 501 outputs divided SDFT coefficients Y_b_a(k) (k = 0,1, ···, ba-1), Y_b_b(k) (k = 0, 1, ···, bb-1), and Y_b_c(k) (k = 0, 1, ···, bc) to down-sampling section 502.

Down-sampling section 502 performs a down-sampling process on divided SDFT coefficients Y_b_a(k) (k = 0, 1, ···, ba-1), Y_b_b(k) (k = 0, 1, ···, bb-1), and Y_b_c(k) (k = 0, 1, ···, bc) input from Bark scale division section 501 according to the following Equation 11.

[11]

$$Y\_b\_b\_re(m) = j0 \cdot Y\_b\_b(n-1) + j1 \cdot Y\_b\_b(n) + j2 \cdot Y\_b\_b(n+1) + j3 \cdot Y\_b\_b(n+2)$$
$$Y\_b\_c\_re(r) = i0 \cdot Y\_b\_c(s-1) + i1 \cdot Y\_b\_c(s) + i2 \cdot Y\_b\_c(s+1) + i3 \cdot Y\_b\_c(s+2)$$

···Equation 11

Here, n = m x 2 is established, and m has a value from 1 to (bb/2 - 1). In a case of m = 0, Y_b_b_re(0) = Y_b_b(0) may be set without performing the down-sampling. Here, filter coefficients [j0, j1, j2, and j3] are set to low-band-pass-filter coefficients which are designed such that aliasing distortion does not occur.

Further, here, s = r x 3 is established, and s has a value from 1 to (bc/3 - 1). In a case of r = 0, Y_b_c_re(0) = Y_b_c(0) is set without performing the down-sampling. Here, filter coefficients [i0 i1, i2, and i3] are set to low-band-pass-filter coefficients which are designed such that aliasing distortion does not occur.

That is, SDFT coefficients Y_b_a(k) (k = 0, 1, ···, ba-1) of the ba section remain as they are, without being subject to down-sampling, SDFT coefficients Y_b_b(k) (k = 0, 1, ···, bb-1) of the bb section is subjected to down-sampling such that the length of the SDFT coefficients becomes 1/2, and SDFT coefficients Y_b_c(k) (k = 0, 1, ···, bc) of the bc section is subjected to down-sampling such that the length of the SDFT coefficients becomes 1/3 (FIG.6). Broken lines in FIG.6 represent correspondence between ranges before the down-sampling and ranges after the down-sampling corresponding to identical frequency bands.

As described above, the SDFT coefficients are divided into three sections of a low band, a middle band, and a high band according to the Bark scale. Then, in the low band section, the SDFT coefficients remain as they are, in the middle band section, SDFT coefficients are obtained by down-sampling into 1/2, and in the high band section, SDFT coefficients are obtained by down-sampling into 1/3. In this way, it is possible to reduce the number of samples of the SDFT coefficients on the scale based on a psychoacoustic characteristic.

The division number based on the Bark scale is not limited to 3, but may be a division number of 2, or 4 or more.

Further, the down-sampling method is not limited to the above-mentioned method, but may use an appropriate down-sampling method according to a form in which the present invention is applied.

Next, down-sampling section 502 outputs SDFT coefficients Y_b_a(k) (k = 0, 1, ···, ba-1), and down-sampled SDFT coefficients Y_b_b_re(k) (k = 0, 1, ···, bb/2 - 1) and Y_b_c_re(k) (k = 0,1, ···, bc/3 - 1) to buffer 503.

Buffer 503 receives SDFT coefficients Y_b_a(k) (k = 0, 1, ···, ba-1), and down-sampled SDFT coefficients Y_b_b_re(k) (k = 0, 1, ···, bb/2 - 1) and Y_b_c_re(k) (k = 0, 1, ···, bc/3 - 1) from down-sampling section 502.

Next, buffer 503 outputs SDFT coefficients Y_b_a_pre(k) (k = 0, 1, ···, ba-1) of the previous frame, and down-sampled SDFT coefficients Y_b_b_re_pre(k) (k = 0, 1, ···, bb/2 - 1) and Y_b_c_re_pre(k) (k = 0, 1, ···, bc/3 - 1) of the previous frame stored therein, to correlation analyzing section 504.

Subsequently, buffer 503 outputs SDFT coefficients Y_b_a(k) (k = 0, 1, ···, ba-1) of the current frame, and down-sampled SDFT coefficients Y_b_b_re(k) (k = 0, 1, ···, bb/2 - 1) and Y_b_c_re(k) (k = 0, 1, ···, bc/3 - 1) of the current frame to correlation analyzing section 504.

Next, buffer 503 stores SDFT coefficients Y_b_a(k) (k = 0, 1, ···, ba-1) of the current frame as Y_b_a_pre(k) (k = 0, 1, ···, ba-1) therein, and stores down-sampled SDFT coefficients Y_b_b_re(k) (k = 0, 1, ···, bb/2 - 1) and Y_b_c_re(k) (k = 0, 1, ···, bc/3 - 1) of the current frame as Y_b_b_re_pre(k) (k = 0, 1, ···, bb/2 - 1) and Y_b_c_re_pre(k) (k = 0, 1, ···, bc/3 - 1) therein. That is, buffer 503 replaces the SDFT coefficients of the previous frame with the SDFT coefficients of the current frame, thereby performing SDFT coefficient update.

Correlation analyzing section 504 receives SDFT coefficients Y_b_a(k) (k = 0, 1, ···, ba-1) of the current frame, down-sampled SDFT coefficients Y_b_b_re(k) (k = 0, 1, ···, bb/2 - 1) and Y_b_c_re(k) (k = 0, 1, ···, bc/3 - 1) of the current frame, SDFT coefficients Y_b_a_pre(k) (k = 0, 1, ···, ba-1) of the previous frame, and down-sampled SDFT coefficients Y_b_b_re_pre(k) (k = 0, 1, ···, bb/2 - 1) and Y_b_c_re_pre(k) (k = 0, 1, ···, bc/3 - 1) of the previous frame from buffer 503.

Next, correlation analyzing section 504 obtains correlation S according to the following Equations (12) to (14), and outputs obtained correlation S as correlation information to tone determining section 107.

[12]

$$SS = \sum_{k=0}^{ba-1} \left( \left| Y\_b\_a(k) \right| - \left| Y\_b\_a\_pre(k) \right| \right)^2$$

$$+ 2 \times \sum_{k=0}^{bb/2-1} \left( \left| Y\_b\_b\_re(k) \right| - \left| Y\_b\_b\_re\_pre(k) \right| \right)^2$$

$$+ 3 \times \sum_{k=0}^{bc/3-1} \left( \left| Y\_b\_c\_re(k) \right| - \left| Y\_b\_c\_re\_pre(k) \right| \right)^2$$

···Equation 12

[13]

$$SA = \sum_{k=0}^{ba-1} \left( \left| Y\_b\_a(k) \right| \right)^2$$

$$+ 2 \times \sum_{k=0}^{bb/2-1} \left( \left| Y\_b\_b\_re(k) \right| \right)^2$$

$$+ 3 \times \sum_{k=0}^{bc/3-1} \left( \left| Y\_b\_c\_re(k) \right| \right)^2$$

···Equation 13

[14]

$$S = \frac{SS}{SA}$$

···Equation 14

In the second terms of Equations (12) and (13), multiplying the total sum by 2 is because the number of samples has been reduced into 2/1, and in the third terms of Equations (12) and (13), multiplying the total sum by 3 is because the number of samples has been reduced into 1/3. As described above, in a case where the number of samples is reduced by down-sampling, a constant according to the reduction can be multiplied such that the individual terms evenly contribute to the computation of the correlation.

As described above, according to Embodiment 2, since the down-sampling is performed to shorten the processed frame (vector sequence) before the correlation is obtained, the length of the processed frame (vector sequence) used for the computation of the correlation is shorter, as compared to the related art. Therefore, according to Embodiment 2, it is possible to reduce the amount of computation necessary for determining the tonality of the input signal.

Further, according to Embodiment 2, it is possible to strengthen the degree of a reduction in the number of samples caused by down-sampling, in step wise, by dividing the frequency components at a ratio which is set by using a scale based on human psychoacoustic characteristic. Accordingly, it is possible to reduce the number of samples, particularly, in a section whose psychoacoustic importance to human is low, and to further reduce the amount of computation.

In Embodiment 2, the Bark scale is used as a scale used when the SDFT coefficients are divided. However, other scales appropriate as a scale based on human psychoacoustic characteristic may be used.

(Embodiment 3)

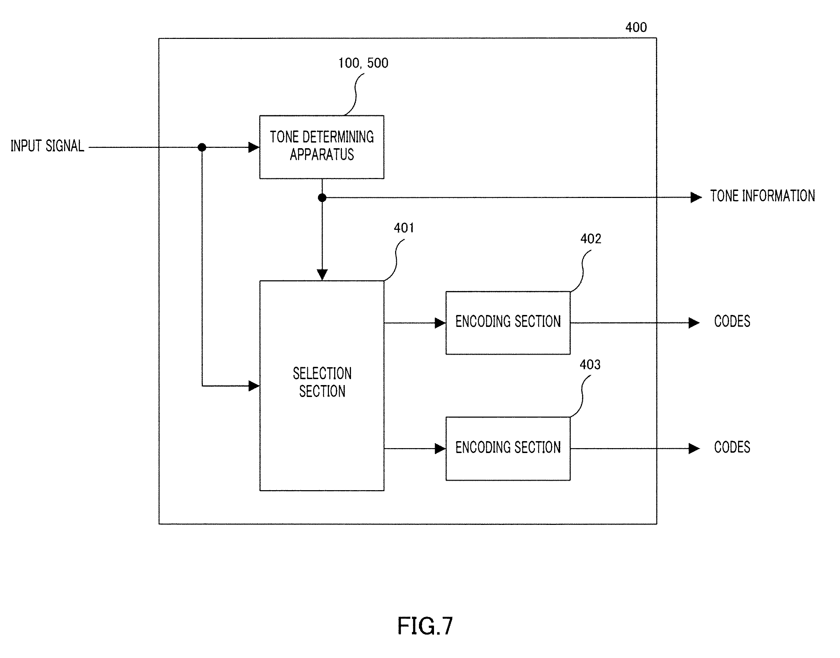

FIG.7 is a block diagram illustrating a main configuration of encoding apparatus 400 according to Embodiment 3. Here, the following description will be made by taking, as an example, a case where encoding apparatus 400 determines a tonality of an input signal and changes an encoding method according to the determination.

Encoding apparatus 400 shown in FIG.7 includes tone determining apparatus 100 according to Embodiment 1 (FIG.1) or tone determining apparatus 500 according to Embodiment 2 (FIG.5).

In FIG.7, tone determining apparatus 100, 500 obtains tone information from an input signal as described in Embodiment 1 or Embodiment 2. Next, tone determining apparatus 100, 500 outputs the tone information to selection section 401. Also, the tone information may be output to the outside of encoding apparatus 400 if necessary. For example, the tone information is used as information for changing a decoding method in a decoding device (not shown). In the decoding device (not shown), in order to decode codes generated by an encoding method selected by selection section 401 to be described below, a decoding method corresponding to the selected encoding method is selected.

Selection section 401 receives the tone information from tone determining apparatus 100, 500, and selects an output destination of the input signal according to the tone information. For example, in a case where the input signal is the 'tone', selection section 401 selects encoding section 402 as the output destination of the input signal, and in a case where the input signal is the 'non-tone', selection section 401 selects encoding section 403 as the output destination of the input signal. Encoding section 402 and encoding section 403 encode the input signal by decoding methods different from each other. Therefore, the selection makes it possible to change the encoding method to be used for encoding the input signal in response to the tonality of the input signal.

Encoding section 402 encodes the input signal and outputs codes generated by the encoding. Since the input signal input to encoding section 402 is the 'tone', encoding section 402 encodes the input signal by frequency transform encoding appropriate for musical sound encoding.

Encoding section 403 encodes the input signal and outputs codes generated by the encoding. Since the input signal input to encoding section 403 is the 'non-tone', encoding section 403 encodes the input signal by CELP encoding appropriate for voice encoding.

The encoding methods which encoding sections 402 and 403 use for encoding are not limited thereto, but the most suitable methods of encoding methods according to the related art may be appropriately used.

In Embodiment 3, the case where there are two encoding sections has been described. However, there may be three or more encoding sections for performing encoding by encoding methods different from one another. In this case, any one encoding section of the three or more encoding sections may be selected in response to the level of the tone determined in step wise.

Further, in Embodiment 3, it has been described that the input signal is a voice signal and/or a musical sound signal. However, even with respect to other signals, the present invention can be implemented as described above.

Therefore, according to Embodiment 3, it is possible to encode the input signal by the optimal encoding method according to the tonality of the input signal.

(Embodiment 4)

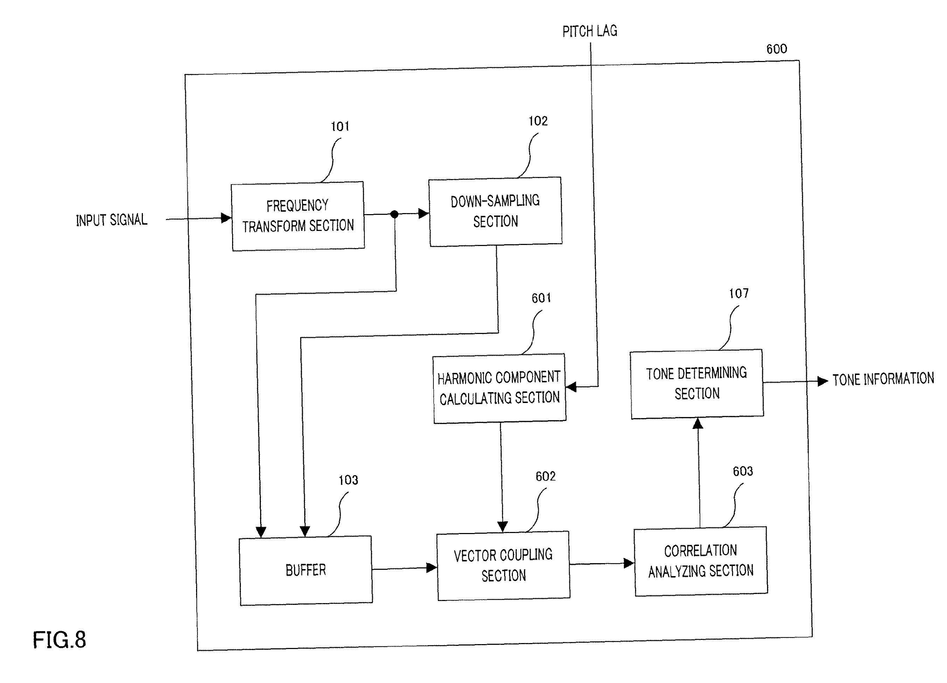

FIG.8 is a block diagram illustrating a main configuration of tone determining apparatus 600 according to Embodiment 4. Here, the following description will be made by taking, as an example, a case where tone determining apparatus 600 determines a tonality of an input signal and outputs the determination result. In FIG.8, identical components to those in FIG.1 (Embodiment 1) are denoted by the same reference symbol, and a description thereof is omitted.

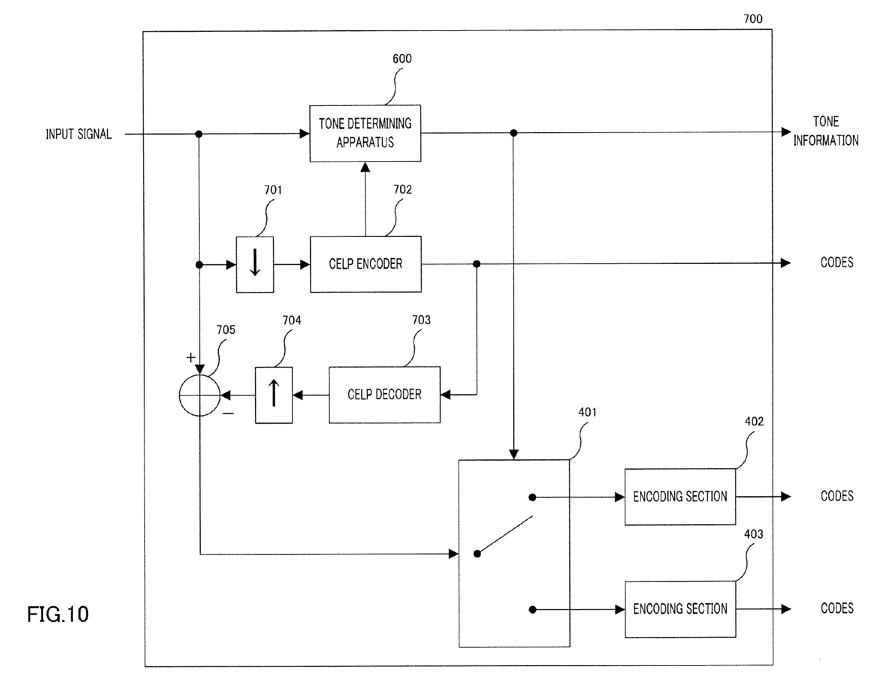

In FIG.8, harmonic component calculating section 601 computes harmonics by using a pitch lag input from CELP encoder 702 (to be described below) shown in FIG. 10, and outputs information representing the computed harmonics (harmonic component information) to vector coupling section 602.

Vector coupling section 602 receives the SDFT coefficients of the previous frame, the down-sampled SDFT coefficients of the previous frame, the SDFT coefficients of the current frame, and the down-sampled SDFT coefficients of the current frame from buffer 103. Also, vector coupling section 602 receives the harmonic component information from harmonic component calculating section 601. Next, vector coupling section 602 couples a portion of the SDFT coefficients of the previous frame with a portion of the down-sampled SDFT coefficients of the previous frame so as to generate new SDFT coefficients, and outputs the generated SDFT coefficients to correlation analyzing section 603. Also, vector coupling section 602 couples a portion of the SDFT coefficients of the current frame with a portion of the down-sampled SDFT coefficients of the current frame so as to generate new SDFT coefficients, and outputs the generated SDFT coefficients to correlation analyzing section 603. At this time, how vector coupling section 602 performs coupling is determined according to the harmonic component information.

Correlation analyzing section 603 receives the coupled SDFT coefficients of the previous frame and the coupled SDFT coefficients of the current frame from vector coupling section 602, obtains a SDFT coefficient correlation between the frames, and outputs the obtained correlation to tone determining section 107.

Tone determining section 107 receives the correlation from correlation analyzing section 603, and determines the tonality of the input signal according to the value of the correlation. Next, tone determining apparatus 107 outputs

EP 2 402 938 A1

tone information as an output of tone determining apparatus 600.

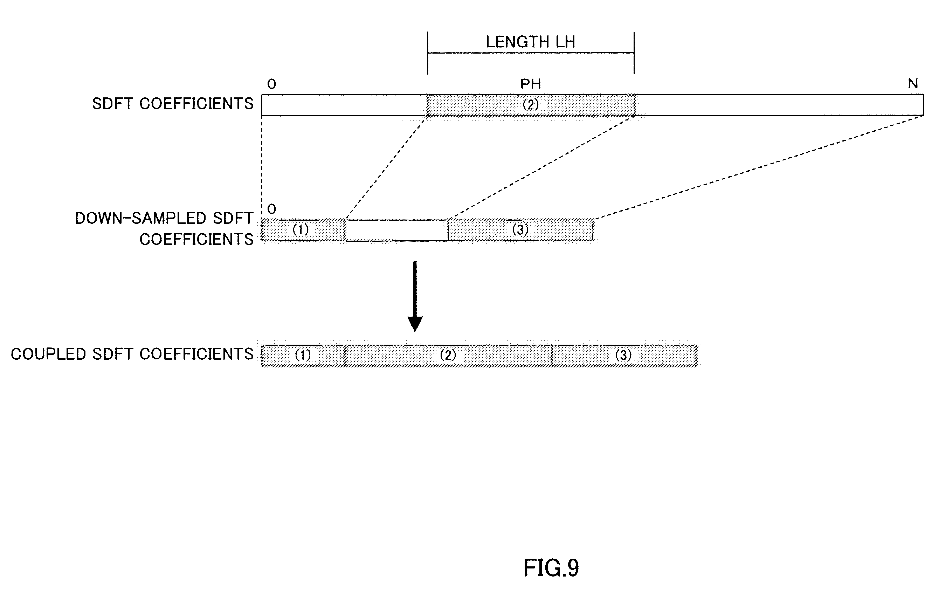

Next, an operation of tone determining apparatus 600 will be described with reference to FIG.9 by taking, as an example, a case where the order of the input signal, which is a tone determination subject, is 2N.

Harmonic component calculating section 601 receives the pitch lag from CELP encoder 702 shown in FIG. 10 to be described below. Here, the pitch lag is a pitch lag of a period (frequency) component which is a base of the input signal, and is called as a pitch period, a fundamental period, or the like in a time domain and is called as a pitch frequency, a fundamental frequency, or the like in a frequency domain. In general, in the CELP encoder, when an adaptive sound source vector is generated, the pitch lag is obtained. The adaptive sound source vector is obtained by cutting the optimal portion as a periodic component of the input signal out of a previously generated sound source sequence (an adaptive sound source code book) by the length of a frame (sub frame). The pitch lag may refer to a value representing how many samples the adaptive sound source vector to be cut out precedes from the current time by. As shown in FIG. 10 to be described below, in a case where the encoding apparatus has a configuration such that CELP encoding is performed and then a component of a high band is further encoded, the pitch lag obtained in CELP encoder 702 may be intactly input to harmonic component calculating section 601, such that a new process for obtaining the pitch lag is unnecessary.

Next, harmonic component calculating section 601 obtains the fundamental frequency by using the input pitch lag. For example, in a case of obtaining the pitch lag in a CELP encoder in which an input is 16000 Hz, the fundamental frequency P can be obtained by the following equation 15.

[15]

$$P = 16000 \times \frac{1}{pl} \qquad \cdots \text{Equation 15}$$

Here, p1 is the pitch lag, and corresponds to a lead position of the cutout portion when the adaptive sound source vector is cut out of the adaptive sound code book. For example, in a case of cutting the adaptive sound source vector out from a position preceding the current time by 40 samples (p1 = 40), it can be seen from equation 15 that the fundamental frequency is 400 Hz.

Next, harmonic component calculating section 601 obtains harmonics which are integer multiples of fundamental frequency P (2xP, 3xP, 4xP, ⋯), and outputs fundamental frequency P and harmonic component information to vector coupling section 602. At this time, harmonic component calculating section 601 may output only harmonic component information corresponding to the frequency band of the SDFT coefficients used for tone determination. For example, in a case where the frequency band of the SDFT coefficients used for tone determination is 8000 Hz to 12000 Hz and the fundamental frequency P is 400 Hz, harmonic component calculating section 601 may output only harmonics (8000 Hz, 8400 Hz, 8800 Hz, ⋯, 12000 Hz) included in the frequency band of 8000 Hz to 12000 Hz. Also, all harmonic component information may not be output and only several harmonics (for example, only three harmonics of 8000 Hz, 8400 Hz, and 8800 Hz) from the lower frequency side may be output. Alternatively, only odd-numbered-harmonic component information (for examples, 8000 Hz, 8800 Hz, 9600 Hz, ⋯) or only even-numbered-harmonic component information (for example, 8400 Hz, 9200 Hz, 10000 Hz, ⋯) may be output.

The harmonic component information output from harmonic component calculating section 601 is uniquely determined according to the value of pitch lag pl. If harmonic component information is required with respect to all pitch lags p1 and is stored in a memory in advance, although a process for obtaining the harmonic component information as described above is not performed, the harmonic component information to be output can be seen by referring to the memory. Therefore, it is possible to prevent an increase in the amount of computation for obtaining the harmonic component information.

Vector coupling section 602 receives SDFT coefficients Y(k) (k = 0, 1, ⋯, N) of the current frame, down-sampled SDFT coefficients Y_re(k) (k = 0, 1, ⋯, N/2 - 1) of the current frame, SDFT coefficients Y_pre(k) (k = 0, 1, ⋯, N) of the previous frame, and down-sampled SDFT coefficients Y_re_pre(k) (k = 0, 1, ⋯, N/2 - 1) of the previous frame from buffer 103 while receiving the harmonic component information (P, 2xP, 3xP, ⋯) from harmonic component calculating section 601.

Next, vector coupling section 602 performs coupling of the SDFT coefficients of the current frame by using the harmonic component information. Specifically, vector coupling section 602 selects SDFT coefficients, which have not been subjected to down-sampling, in the vicinities of frequency bands corresponding to the harmonics, and selects the down-sampled SDFT coefficients in frequency bands which do not correspond to the harmonics, and couples those SDFT coefficients. For example, in a case where only a harmonic of 2xP is input as the harmonic component information, SDFT coefficients corresponding to the frequency of 2xP is Y(PH), and SDFT coefficients, which have not been subjected

12

to down-sampling, are selected in a range (whose length is LH) in the vicinity of Y(PH), vector coupling section 602 performs SDFT coefficient coupling according to the following equation 16.

[16]

$$Y\_co(k) = Y\_re(k) \quad (k = 0,1,\cdots,PH/2 - LH/4 - 1)$$
$$Y\_co(k) = Y(k + PH/2 - LH/4) \quad (k = PH/2 - LH/4,\cdots,PH/2 + 3 \times LH/4 - 1)$$
$$Y\_co(k) = Y\_re(k - LH/2) \quad (k = PH/2 + 3 \times LH/4,\cdots,(N + LH)/2 - 1)$$

$\cdots$Equation 16

Similarly, vector coupling section 602 performs the SDFT coefficients of the previous frame according to the following equation 17.

[17]

$$Y\_co(k)\_pre = Y\_re\_pre(k) \quad (k = 0,1,\cdots,PH/2 - LH/4 - 1)$$
$$Y\_co(k)\_pre = Y\_pre(k + PH/2 - LH/4) \quad (k = PH/2 - LH/4,\cdots,PH/2 + 3 \times LH/4 - 1)$$
$$Y\_co(k)\_pre = Y\_re\_pre(k - LH/2) \quad (k = PH/2 + 3 \times LH/4,\cdots,(N + LH)/2 - 1)$$

$\cdots$Equation 17

A state of the coupling process in vector coupling section 602 is as shown in FIG.9.

As shown in FIG.9, the down-sampled SDFT coefficients ((1) and (3)) are basically used in the coupled SDFT coefficients, and the coupling is performed by inserting SDFT coefficients ((2)), corresponding to a range centered at frequency PH of the harmonic and having length LH, between (1) and (3). Broken lines in FIG.9 represent correspondence between ranges before the down-sampling and ranges after the down-sampling corresponding to identical frequency bands. That is, as shown in FIG.9, the vicinity of frequency PH of the harmonic is regarded as important, and in the vicinity of frequency PH of the harmonic, the SDFT coefficients, which have not been subjected to down-sampling, are used as they are. Here, LH which is the length of the cutout portions is preset to an appropriate constant value. If LH increases, since the coupled SDFT coefficients are lengthened, the amount of computation in the next process for obtaining a correlation increases, while the obtained correlation becomes more accurate. Therefore, LH may be determined in consideration of a tradeoff between the amount of computation and the accuracy of the correlation. Also, LH may be adaptively changed.

In a case where a plurality of harmonics are input as the harmonic component information to vector coupling section 602, in the vicinities of the frequencies of the plurality of harmonics, as shown in FIG.9 (2), a plurality of SDFT coefficient sections, which have not been subjected to down-sampling, may be cut out and be used for coupling.

Next, vector coupling section 602 outputs coupled SDFT coefficients Y_co(k) (k = 0, 1, $\cdots$, K) of the current frame and coupled SDFT coefficients Y_co_pre(k) (k = 0, 1, $\cdots$, K) of the previous frame to correlation analyzing section 603. Here, K is (N + LH)/2 - 1.

Correlation analyzing section 603 receives coupled SDFT coefficients Y_co(k) (k = 0, 1, $\cdots$, K) of the current frame and coupled SDFT coefficients Y_co_pre(k) (k = 0, 1, $\cdots$, K) of the previous frame from vector coupling section 602, obtains correlation S according to Equations (5) to (8), and outputs obtained correlation S as the correlation information to tone determining section 107.

As described above, according to Embodiment 4, in frequency bands other than the vicinities of frequencies corresponding to harmonics, the length of the vector sequence is shortened by down-sampling. Therefore, it is possible to reduce the amount of computation necessary for determining the tonality of the input signal. In general, the vibration of strings of a musical instrument or air in a tube of a musical instrument includes not only a fundamental frequency component but also harmonics having frequencies which are integer multiples of the fundamental frequency (two times, three times, $\cdots$) (harmonic structure). Even in this case, according to Embodiment 4, in ranges in the vicinities of the frequencies corresponding to the harmonics, the vector sequence is not shortened but is used as it is for tonality determination. Therefore, it is possible to consider the harmonic structure important for tonality determination and to prevent deterioration of the tonality determination performance due to a lack of an amount of information by down-sampling.

(Embodiment 5)

FIG.10 is a block diagram illustrating a main configuration of encoding apparatus 700 according to Embodiment 5. Here, the following description will be made by taking, as an example, a case where encoding apparatus 700 determines a tonality of an input signal and changes an encoding method according to the determination result. In FIG. 10, identical components to those in FIG.7 (Embodiment 3) are denoted by the same reference symbol, and a description thereof is omitted.

Encoding apparatus 700 shown in FIG. 10 includes tone determining apparatus 600 (FIG.8) according to Embodiment 4.

In FIG.10, down-sampling section 701 performs down-sampling on the input signal, and outputs the down-sampled input signal to CELP encoder 702. For example, in a case where the input signal to down-sampling section 701 is 32000 Hz, the input signal is often down-sampled into 16000 Hz so as to be the optimal frequency band as an input signal to CELP encoder 702.

CELP encoder 702 performs CELP encoding on the down-sampled input signal input from down-sampling section 701. CELP encoder 702 outputs codes obtained as a result of the CELP encoding to CELP decoder 703 while outputting the codes as a portion of an encoding result of encoding apparatus 700 to the outside of encoding apparatus 700. Also, CELP encoder 702 outputs a pitch lag obtained in the CELP encoding process to tone determining apparatus 600.

Tone determining apparatus 600 obtains tone information from the input signal and the pitch lag as described in Embodiment 4. Next, tone determining apparatus 600 outputs the tone information to selection section 401. Similarly to Embodiment 3, the tone information may be output to the outside of encoding apparatus 700 if necessary.

CELP decoder 703 decodes the codes input from CELP encoder 702. CELP decoder 703 outputs the decoded signal obtained as a result of the CELP decoding, to up-sampling section 704.

Up-sampling section 704 performs up-sampling on the decoded signal input from CELP decoder 703, and outputs the up-sampled signal to adder 705. For example, in a case where the input signal to down-sampling section 701 is 32000 Hz, up-sampling section 704 obtains the decoded signal of 32000 Hz by the up-sampling.

Adder 705 subtracts the up-sampled decoded signal from the input signal, and outputs a residual signal after the subtraction to selection section 401. In this way, signal components encoded by CELP encoder 702 can be taken out of the input signal, thereby making signal components on the high-frequency band side, which has not been encoded in CELP encoder 702, an encoding subject in the next encoding process.

Encoding section 402 encodes the residual signal, and outputs codes generated by the encoding. Since the input signal input to encoding section 402 is the 'tone', encoding section 402 encodes the residual signal by an encoding method appropriate for musical sound encoding.

Encoding section 403 encodes the residual signal, and outputs codes generated by the encoding. Since the input signal input to encoding section 403 is the 'non-tone', encoding section 403 encodes the residual signal by an encoding method appropriate for voice encoding.

In Embodiment 5, the case where there are two encoding sections has been described as an example. However, there may be three or more encoding sections for performing encoding by encoding methods different from one another. In this case, any one encoding section of the three or more encoding sections may be selected in response to the level of the tone determined in step wise.

Further, in Embodiment 5, it has been described that the input signal is a voice signal and/or a musical sound signal. However, even with respect to other signals, the present invention can be implemented as described above.

Therefore, according to Embodiment 5, it is possible to encode the input signal by the optimal encoding method according to the tonality of the input signal.

The present invention is not limited to the configurations described in Embodiments, but may be changed into various forms as long as it possible to obtain pitch lag information. Even in these changed forms, effects as described above can be obtained.

Embodiments of the present invention have been described above.

The frequency transform on the input signal may be performed by frequency transform other than SDFT, for example, discrete Fourier transform (DFT), fast Fourier transform (FFT), discrete cosine transform (DCT), modified discrete cosine transform (MDCT), etc.

Further, the tone determining apparatus and the encoding apparatus according to Embodiments can be mounted in a communication terminal device and a base station apparatus in a mobile communication system in which voices, music sounds, and the like are transmitted, whereby it is possible to provide a communication terminal device and a base station apparatus having effects as described above.

In Embodiments, a case where the present invention is implemented by hardware has been described as an example; however, the present invention can be implemented by software. For example, an algorithm of a tone determination method according to the present invention may be written in a programming language, and the program may be stored in a memory and be executed by an information processing unit, whereby it possible to implement the tone determining apparatus and the same functions according to the present invention.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent application No. 2009-046517, filed on February 27, 2009, Japanese Patent application No. 2009-120112, filed on May 18, 2009, and Japanese Patent application No. 2009-236451, filed on October 13, 2009, including the specifications, drawings and abstracts, are incorporated herein by reference in their entirety.

Industrial Applicability

The present invention can be applied for voice encoding, voice decoding, etc.

**Claims**

1. A tone determining apparatus comprising:

   a shortening section that performs a shortening process to shorten a length of a vector sequence of an input signal subjected to frequency transform;
   a correlation section that obtains a correlation by using the shortened vector sequence; and
   a determining section that determines a tonality of the input signal by using the correlation.

2. The tone determining apparatus according to claim 1, further comprising a coupling section that couples the vector sequence of the input signal subjected to the frequency transform and the shortened vector sequence so as to generate a coupled vector sequence, wherein the correlation section obtains a correlation by using the coupled vector sequence.

3. The tone determining apparatus according to claim 1, wherein the shortening section performs the shortening process by a down-sampling process.

4. The tone determining apparatus according to claim 1, further comprising a determining section that determines a frequency band corresponding to a predetermined condition in determining the tonality by using power for every predetermined frequency band of the input signal, wherein the shortening section performs the shortening process in frequency bands except for the frequency band corresponding to the predetermined condition.

5. The tone determining apparatus according to claim 4, wherein the determining section determines the frequency band corresponding to the predetermined condition by using the power for every predetermined frequency band obtained in the correlation obtaining process of the correlation section.

6. The tone determining apparatus according to claim 1, further comprising a division section that divides the vector sequence of the signal subjected to the frequency transform at a ratio set by using a scale based on a human psychoacoustic characteristic, wherein the shortening section performs the shortening process to shorten lengths of divided vector sequences.

7. The tone determining apparatus according to claim 6, wherein the division section uses Bark scale as the scale.

**8.** The tone determining apparatus according to claim 2, further comprising a harmonic component calculating section that computes harmonics by using a pitch lag obtained in code excited linear predictive encoding, wherein the coupling section couples the vector sequence of the input signal subjected to the frequency transform and the shortened vector sequence by using the harmonics.

**9.** The tone determining apparatus according to claim 8, wherein the coupling section couples the shortened vector sequence in a frequency band which does not correspond to the harmonics, to the vector sequence of the input signal subjected to the frequency transform.

**10.** An encoding apparatus comprising:

the tone determining apparatus according to claim 1;
a plurality of encoding sections that encode the input signal by using encoding methods different each other; and
a selection section that selects an encoding section to encode the input signal from the plurality of encoding sections, in response to a determination result of the determining section.

**11.** An encoding apparatus comprising:

the tone determining apparatus according to claim 8;
a code excited linear predictive encoding section that performs code excited linear predictive encoding on the input signal, generates a code excited linear predictive decoded signal while obtaining the pitch lag, and generates a residual signal between the input signal and the code excited linear predictive decoded signal;
a plurality of encoding sections that encode the residual signal by using encoding methods different from each other; and
selection section that selects an encoding section to encode the residual signal from the plurality of encoding sections, in response to a determination result of the determining section.

**12.** A communication terminal device comprising the tone determining apparatus according to claim 1.

**13.** A base station apparatus comprising the tone determining apparatus according to claim 1.

**14.** A tone determination method comprising:

a shortening process that performs a shortening process to shorten a length of a vector sequence of an input signal subjected to frequency transform;
a correlation process that obtains a correlation by using the shortened vector sequence; and
a determination process that determines a tonality of the input signal by using the correlation.

EP 2 402 938 A1

FIG.1

FIG.2

EP 2 402 938 A1

EP 2 402 938 A1

COUPLED SDFT
COEFFICIENTS OF
PREVIOUS FRAME

COUPLED SDFT
COEFFICIENTS OF
CURRENT FRAME

201

ERROR POWER
CALCULATING
SECTION

202

POWER
CALCULATING
SECTION

203

ADDER

204

DIVISION SECTION

CORRELATION INFORMATION

POWER INFORMATION

105

FIG.3

FIG.4

FIG.5

FIG.6

FIG.7

TONE DETERMINING APPARATUS 100, 500

SELECTION SECTION 401

ENCODING SECTION 402

ENCODING SECTION 403

INPUT SIGNAL

TONE INFORMATION

CODES

CODES

400

EP 2 402 938 A1

PITCH LAG

600

101                          102

INPUT SIGNAL → FREQUENCY TRANSFORM SECTION → ● → DOWN-SAMPLING SECTION

601                          107

HARMONIC COMPONENT CALCULATING SECTION ← 

TONE DETERMINING SECTION → TONE INFORMATION

103                  602                  603

BUFFER → VECTOR COUPLING SECTION → CORRELATION ANALYZING SECTION

FIG.8

LENGTH LH

O                    PH                                   N

SDFT COEFFICIENTS    |_____(2)_____|

O

DOWN-SAMPLED SDFT
COEFFICIENTS    | (1) |     | (3) |

COUPLED SDFT COEFFICIENTS    | (1) |    (2)    | (3) |

FIG.9

FIG.10

## INTERNATIONAL SEARCH REPORT

| | International application No. |
|---|---|
| | PCT/JP2010/001331 |

A. CLASSIFICATION OF SUBJECT MATTER
*G10L11/00*(2006.01)i, *G10L19/00*(2006.01)i

According to International Patent Classification (IPC) or to both national classification and IPC

B. FIELDS SEARCHED

Minimum documentation searched (classification system followed by classification symbols)
G10L11/00-11/06, G10L19/00-19/14

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US 6980950 B1  (Texas Instruments Inc.), 27 December 2005 (27.12.2005), entire text; all drawings (Family: none) | 1-14 |
| A | JP 2007-65226 A  (Kabushiki Kaisha Advanced Telecommunications Research Institute International), 15 March 2007 (15.03.2007), entire text; all drawings & US 2009/0089051 A1    & WO 2007/026436 A1 | 1-14 |
| A | JP 2008-176155 A  (KDDI Corp.), 31 July 2008 (31.07.2008), entire text; all drawings (Family: none) | 1-14 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 April, 2010 (27.04.10) | 18 May, 2010 (18.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007052088 A
- JP 2009046517 A
- JP 2009120112 A
- JP 2009236451 A